# EUROPÄISCHE PATENTSCHRIFT

(11) **EP 2 926 880 B1**
(45) Veröffentlichungstag und Bekanntmachung des Hinweises auf die Patenterteilung: **17.01.2018**
(21) Anmeldenummer: 15158931.4
(22) Anmeldetag: 13.03.2015
(51) Int. Cl.: B01D 35/147, B01D 35/15, B01D 35/153, B01D 29/05, B01D 29/54

(54) **FILTEREINHEIT FÜR EIN HYDRAULISCHES SYSTEM**
FILTER UNIT FOR A HYDRAULIC SYSTEM
UNITÉ DE FILTRE POUR UN SYSTÈME HYDRAULIQUE

(30) Priorität: 03.04.2014 DE 102014206406
(43) Veröffentlichungstag der Anmeldung: 07.10.2015
(73) Patentinhaber: Schaeffler Technologies AG & Co. KG, 91074 Herzogenaurach (DE)
(72) Erfinder: Baßler, Manuel, 77855 Achern (DE)

(56) Entgegenhaltungen:
- EP-A2- 1 449 572
- WO-A1-2014/026681
- US-A- 3 799 347

## Beschreibung

Die vorliegende Erfindung betrifft eine Filtereinheit für ein hydraulisches System. Die vorliegende Erfindung betrifft insbesondere eine als Partikelsperre dienende Filtereinheit, welche unabhängig von der Viskosität des Hydraulikfluids ein Passieren von Feststoffpartikeln effektiv verhindern kann.

In hydraulischen Systemen zur Kupplungsbetätigung in Kraftfahrzeugen, beispielsweise, können fertigungsbedingt oder durch Verschleiß im Betrieb Schmutzpartikel als Schwebstoffe in dem Hydraulikfluid enthalten sein. Diese können die Betriebssicherheit des hydraulischen Systems beeinträchtigen.

Um dies zu verhindern, sind Filtersysteme bekannt, welche in hydraulische Leitungen, beispielsweise von Kupplungssystemen, eingebaut werden, um so die Feststoffpartikel aus dem System herauszufiltern. Aus der Druckschrift DE 10 2007 025 411 A1 ist beispielsweise ein hydraulisches Ausrücksystem bekannt, wobei der Geberzylinder über eine Nachlaufleitung mit einem Flüssigkeitsreservoir verbunden ist und in die Verbindung ein Filter eingesetzt ist. Durch diese Anordnung wird beim Schnüffeln nachfließendes Hydraulikfluid gefiltert. Weiterhin ist aus der US 3,799,347 eine Filtereinheit gemäß dem Oberbegriff des Patentanspruchs 1 bekannt.

Der Nachteil an den aus dem Stand der Technik bekannten Filtern liegt insbesondere an dem benötigten Bauraum, sowie an der teuren Ventiltechnik die benötigt werden würde, wenn diese im Fall für den Einbau zwischen Hydraulikpumpe und Nehmerzylinder (PowerPack und CSC) oder Geberzylinder (CMC) und Nehmerzylinder eingesetzt werden würden. Anhand dieser sollte gemäß dem Stand der Technik sichergestellt werden, dass der Filter nur in eine Richtung von dem Fluid durchströmt wird. Dadurch treten gegebenenfalls hohe Wirkungsgradverluste durch Umlenkungen und Querschnittsänderungen auf. Weiterhin verwenden derartige Lösungen oftmals eine Funktionsweise mit Bypassfunktion, welche sicherstellen soll, dass die Zylinder auch bei tiefen Temperaturen beziehungsweise einer hohen Viskosität des Hydraulikfluids betrieben werden können. Ist diese Funktion in Betrieb, können Schmutzpartikel ohne ausgefiltert zu werden an den Filterelementen vorbeigeschleust werden. Der Filter verliert dadurch zumindest temporär seine Wirkung.

Hiervon ausgehend ist es die Aufgabe der vorliegenden Erfindung, die aus dem Stand der Technik bekannten Nachteile zumindest teilweise zu überwinden. Es ist insbesondere die Aufgabe der Erfindung, eine Filtereinheit zu schaffen, die ein sichereres Filterverhalten auch bei tiefen Temperaturen und damit einhergehenden hohen Viskositäten des Hydraulikfluids bewirkt.

Die Lösung der Aufgabe erfolgt erfindungsgemäß durch eine Filtereinheit mit den Merkmalen des Anspruchs 1. Die Lösung der Aufgabe erfolgt erfindungsgemäß ferner durch ein hydraulisches System mit den Merkmalen des Anspruchs 5. Bevorzugte Ausgestaltungen der Erfindung sind in den Unteransprüchen angegeben.

Die erfindungsgemäße Filtereinheit für ein hydraulisches System, insbesondere für ein hydraulisches Kupplungssystem, zum Filtrieren von Feststoffkomponenten aus einem Hydraulikfluid, umfasst einen ersten Fluidpfad, der von einem ersten Fluidanschluss zu einem zweiten Fluidanschluss führt, wobei in dem ersten Fluidpfad ein Filterelement zum beidseitigen Filtern von Feststoffpartikeln vorgesehen ist. Die Filtereinheit weist zusätzlich einen zweiten von dem ersten Fluidanschluss zu dem zweiten Fluidanschluss führenden Fluidpfad auf, in dem ein Hubspeichervolumen zur Aufnahme eines selbsttätig gefilterten Fluidvolumens angeordnet ist, wobei bei einem vorbestimmten Fluideingangsdruck ein mit dem als Fluidausgang dienenden Fluidanschluss fluidisch verbundener Auslass des Hubspeichervolumens öffnet.

Die Filtereinheit gemäß der vorliegenden Erfindung erlaubt es auf einfache und kostengünstige Weise, ein sichereres Filterverhalten auch bei tiefen Temperaturen und damit einhergehenden hohen Viskositäten des Hydraulikfluids zu ermöglichen.

Insbesondere kann die Filtereinheit als Partikelsperre dienen, welche effektiv verhindert, dass Feststoffpartikel von einer hydraulischen Komponente zu einer weiteren hydraulischen Komponente in einem hydraulischen System wandern. Dies kann von Vorteil sein, da es bei einem Kupplungs-Einrücksystem oder Kupplungsausrücksystem, beispielsweise, zwar keinen hydraulischen Kreislauf gibt, sondern das Fluid beim Ein- und Ausrücken jeweils in Betätigungsrichtung verschoben wird. Somit wird der Filter ebenfalls von beiden Richtungen durchströmt. Das darin verschobene Volumen des Vor- und Rückhubs ist dabei in der Regel gleich groß. Darin befindliche Partikel können jedoch trotzdem über die Anzahl der Betätigungen in der Leitung wandern und vom Nehmerzylinder in die Steuerventile der Hydraulikpumpe, beispielsweise, gelangen. Dort können diese im schlimmsten Fall das Steuerventil blockieren, was zu einer Beeinträchtigung des hydraulischen Systems führen würde. Beispielsweise wäre ein Fahrzeug dann nicht mehr schaltbar. In abgeschwächter Form würden sich Beschädigungen der Steuerkanten in Einbußen des Fahrkomforts äußern. Um derartige oder weitere insbesondere durch ein "Partikelwandern" auftretende Nachteile zu verhindern, ist die Filtereinheit in jeder Anwendung einsetzbar, in der eine Unterbrechung für ein "Partikelwandern" benötigt wird.

Hierzu ist die Filtereinheit gemäß der vorliegenden Erfindung insbesondere einsetzbar in einer hydraulischen Leitung, die zwischen zwei hydraulischen Bauteilen, wie etwa einem Kupplungsnehmerzylinder und einem Kupplungsgeberzylinder, verläuft. Die Filtereinheit umfasst einen ersten Fluidpfad, der von einem ersten Fluidanschluss zu einem zweiten Fluidanschluss führt. Durch diesen Fluidpfad kann die Hydraulikflüssigkeit insbesondere während einer herkömmlichen Betätigung des hydraulisch betätigten Bauteils, wie etwa einer Kupplungsbetätigung, insbesondere bei Normaltemperatur des Hydraulikfluids, strömen, also insbesondere dann, wenn das Hydraulikfluid eine vergleichsweise geringe Viskosität aufweist. Dabei kann das Hydraulikfluid je nach Betätigung von dem als Fluideingang verwendbaren ersten Fluidanschluss zu dem als Fluidausgang verwendbaren zweiten Fluidanschluss fließen oder umgekehrt, wobei sich dies auf eine Strömungsrichtung des Hydraulikfluids bezieht. In für den Fachmann ohne weiteres verständlicher Weise kann der erste Fluidanschluss somit gleichermaßen als Fluidausgang dienen und der zweite Fluidanschluss kann als Fluideingang dienen, so dass die Funktion beziehungsweise die Strömungsrichtung mit Bezug auf den ersten beziehungsweise zweiten Fluidanschluss nicht beschränkt ist. Dies kann insbesondere dann gelten, wenn, wie es bevorzugt ist, die Filtereinheit symmetrisch aufgebaut ist.

In dem ersten Fluidpfad ist dabei ein Filterelement zum beidseitigen Filtern von Feststoffpartikeln vorgesehen. Somit kann das Filterelement unabhängig von der Strömungsrichtung des Hydraulikfluids ein Durchtreten von Feststoffpartikeln sicher verhindern. Dabei kann das Filterelement grundsätzlich derart ausgestaltet sein, wie es für Fluidfilter in hydraulischen Systemen bekannt ist, und beispielsweise durch einen beidseitig wirkenden Filtereinsatz ausgestaltet sein. Sollten metallische Partikel ferner ausschlaggebend für Defekte sein, könnte zusätzlich ein magnetisches Filterelement für die Herabsetzung der Restschmutzbestimmungen zum Einsatz kommen. Der Grad der Filterung kann dabei in für den Fachmann verständlicher Weise an den konkreten Anwendungsfall angepasst sein. Bei einer geringen Viskosität des Hydraulikfluids beziehungsweise der Hydraulikflüssigkeit kann so ein Durchtreten von Partikeln unabhängig von der Strömungsrichtung sicher verhindert werden.

Um weiterhin ein Durchtreten von Partikeln auch bei einer vergleichsweise hohen Viskosität des Hydraulikfluids, etwa bei niedrigen Temperaturen, wie etwa dem Kaltstart eines Kraftfahrzeugs, zu verhindern, ist entgegen der Lösung gemäß dem Stand der Technik, wonach ein bloßer filterfreier Bypass vorgesehen wird, bei der hier beschriebenen Filtereinheit ein zweiter von dem ersten Fluidanschluss zu dem zweiten Fluidanschluss führender Fluidpfad vorgesehen, in dem ein Hubspeichervolumen zur Aufnahme eines selbsttätig gefilterten Fluidvolumens angeordnet ist, wobei bei einem vorbestimmten Fluideingangsdruck ein mit dem als Fluidausgang dienenden Fluidanschluss fluidisch verbundener Auslass des Hubspeichervolumens öffnet.

Im Detail ist somit vorgesehen, dass neben dem ersten Fluidpfad ein weiterer, von dem ersten zumindest teilweise verschiedener zweiter Fluidpfad, vorgesehen ist. Dieser dient im Wesentlichen dazu, bei einem vorbeschriebenen Fluideingangsdruck einen Bypass zu schaffen, um das Filterelement in dem ersten Fluidpfad zu umgehen. Denn ein hoher Fluideingangsdruck kann insbesondere dadurch entstehen, dass das Fluid für ein ungehindertes Durchtreten durch das Filterelement zu viskos ist und es somit zu einem Fluidstau vor dem Filterelement und damit einhergehend zu einem Druckunterschied stromaufwärts und stromabwärts des Filterelements kommen kann. Daher bildet der Bypass einen Strömungsweg für das Hydraulikfluid, welcher das Filterelement umgeht. Somit kann Hydraulikfluid beziehungsweise Hydraulikflüssigkeit unabhängig von dem Filterelement durch das Vorsehen des zweiten Fluidpfades und insbesondere durch das in dem zweiten Fluidpfad vorgesehene Hubspeichervolumen zu dem gewünschten Bauteil strömen, wie dies nachstehend im Detail erläutert wird.

Im Detail ist in dem zweiten Fluidpfad ein Hubspeichervolumen zur Aufnahme eines selbsttätig gefilterten Fluidvolumens angeordnet. Das Hubspeichervolumen dient dabei dazu, ein Volumen an Hydraulikflüssigkeit aufzunehmen, welches einem in dem Hydrauliksystem vorgesehenen Maximalhub entspricht oder ein größeres Volumen an Hydraulikflüssigkeit aufnehmen kann, wobei dieses Volumen etwa einem Vielfachen des Maximalhubs entsprechen kann. Somit reicht das in dem Hubspeichervolumen befindliche Volumen aus, um einen oder eine Mehrzahl an Betätigungsvorgängen des entsprechenden hydraulisch betätigten Bauteils zu ermöglichen. Beispielsweise können so ein oder eine Mehrzahl an Kupplungsvorgängen durch die in dem Hubspeichervolumen befindliche Hydraulikflüssigkeit ermöglicht werden.

Das in dem Hubspeichervolumen befindliche Volumen an Hydraulikflüssigkeit ist dabei bereits selbsttätig gefiltert, also bereits von störenden Feststoffpartikeln befreit, bevor oder wenn es in das Hubspeichervolumen einströmt. Dabei soll ein selbsttätiges Filtern insbesondere bedeuten, dass das Hydraulikfluid automatisch bei einem Eintritt in das Hubspeichervolumen gefiltert wird, somit keine zusätzlichen Arbeitsschritte für das Filtern notwendig sind. Dies wird dadurch erreicht, dass bei einem Fluideingang des Hubspeichervolumens ein Filterelement vorgesehen ist.

Bei einem vorbestimmten Fluideingangsdruck ist es ferner vorgesehen, dass ein mit dem als Fluidausgang dienenden Fluidanschluss fluidisch verbundener Auslass des Hubspeichervolumens öffnet. In anderen Worten ist die Filtereinheit derart ausgestaltet, dass bei einem vorbestimmten Fluideingangsdruck das gefilterte Fluid aus dem Hubspeichervolumen durch den Auslass zu dem entsprechenden Fluidanschluss und somit zu dem gewünschten Bauteil, wie etwa einem Kupplungsnehmerzylinder, strömen kann. Der vorbestimmte Fluideingangsdruck kann dabei grundsätzlich frei wählbar sein und insbesondere einem Wert entsprechen, der einer Viskosität des Hydraulikfluids entspricht beziehungsweise durch diese ausgelöst wird, bei dem durch eine zu hohe Viskosität kein ausreichendes Versorgen des entsprechenden Bauteils durch den ersten Fluidpfad möglich ist. Eine fluidische Verbindung ist dabei insbesondere eine derartige Verbindung, welche das Durchströmen eines Fluids, wie insbesondere des Hydraulikfluids, ermöglicht. Dadurch, dass das in dem Hubspeichervolumen befindliche Volumen an Hydraulikflüssigkeit bereits gefiltert ist, braucht ferner zwischen einer Öffnung des Hubspeichervolumens und dem Fluidausgang kein Filterelement vorgesehen zu sein. Somit ist es möglich, dass das Hydraulikfluid auch bei hoher Viskosität im Wesentlichen ohne Druckabfall zu der entsprechenden hydraulischen Komponente strömen kann und trotzdem keine Feststoffpartikel mitschleppt.

Durch die vorbeschriebene Ausgestaltung insbesondere des zweiten Fluidpfades wird es somit möglich, dass auch bei einer hohen Viskosität des Hydraulikfluids das entsprechende Bauteil mit feststofffreiem Hydraulikfluid versorgt wird und somit eine effektive Partikelsperre unabhängig von der Viskosität des Hydraulikfluids möglich ist.

Somit kann unter Verwendung einer derartigen Filtereinheit auf teure Spülprozesse in der Fertigung verzichtet werden. Auf Einzelteilebene können ferner die Restschmutzbestimmungen gelockert werden oder ebenfalls entfallen. Dadurch können signifikant Kosten eingespart werden.

Darüber hinaus kann die vorbeschriebene Filtereinheit besonders kompakt ausgestaltet werden, so dass im Vergleich zu den Lösungen aus dem Stand der Technik der Platzbedarf reduziert werden kann.

Auch brauchen bei der vorbeschriebenen Filtereinheit keine aufwändigen und kostenintensiven Ventillösungen geschaffen werden, um den Filter nur von einer Seite mit dem Hydraulikfluid zu durchströmen. Dadurch kann die Filtereinheit besonders kostensparend ausgestaltet werden.

Somit erlaubt die vorbeschriebene Filtereinheit zusammenfassend auf einfache und kompakte Weise, dass sowohl bei einer vergleichsweise niedrigen Viskosität als auch bei einer vergleichsweise hohen Viskosität, das Hydraulikfluid durch die Filtereinheit strömen kann beziehungsweise das entsprechende hydraulisch zu betätigende Bauteil mit Hydraulikflüssigkeit versorgt werden kann, in der Hydraulikflüssigkeit befindliche Feststoffpartikel jedoch die Filtereinheit nicht passieren können. Somit bildet die vorbeschriebene Filtereinheit eine wirksame Partikelsperre unabhängig von der Viskosität des Hydraulikfluids.

Das Hubspeichervolumen der Filtereinheit weist wenigstens einen mit einem Filterelement ausgestatteten Fluideinlass auf. Insbesondere in dieser Ausgestaltung kann ein besonders einfaches selbsttätiges Filtern des Hydraulikfluids vor einem Eintritt in das Hubspeichervolumen erfolgen. Denn das Hydraulikfluid muss in dieser Ausgestaltung zwingend den Fluideinlass und damit das Filterelement passieren, um in das Hubspeichervolumen eintreten zu können. Dabei ist diese Ausgestaltung ferner äußerst kompakt ausbildbar, da ein Filterelement in einem Fluideinlass nur sehr wenig Raum benötigt. Dabei kann nur ein mit einem Filterelement ausgestatteter Fluideinlass vorgesehen sein, oder es kann eine Mehrzahl an Fluideinlässen vorgesehen sein. Beispielsweise können zwei entsprechende Fluideinlässe vorgesehen sein, welche jeweils einem Fluidanschluss zugeordnet sind.

Zudem wird das Hubspeichervolumen der Filtereinheit durch zwei kraftwirkend miteinander verbundene Kolben begrenzt, die in einem das Hubspeichervolumen begrenzenden Zylinder verfahrbar sind, wobei die Kolben an ihrer Stirnseite den mit einem Filterelement ausgestatteten Fluideinlass aufweisen und in Richtung des Hubspeichervolumens federvorgespannt sind, wobei sich bei einem Verlagern eines Kolbens entgegen der Federkraft der Auslass des Hubspeichervolumens öffnet. Insbesondere in dieser Ausgestaltung kann das Hydraulikfluid auf einfache und kostengünstige und dabei wirksame Weise selbsttätig durch das Filterelement gefiltert werden, bevor es in das Hubspeichervolumen eintritt. Bezüglich der Federvorspannung können die Kolben durch zwei Druckfedern vorgespannt angeordnet sein. Die Ausgestaltung wie insbesondere die Federkraft der Druckfedern sowie die Ausgestaltung der kraftwirkenden Verbindung, welche ebenfalls als Federelement beziehungsweise Druckfeder ausgestaltet sein kann, können dabei den Öffnungsdruck des Hubspeichervolumens bestimmen. Denn durch einen Eingangsdruck auf den in Fluidrichtung ersten Kolben verlagert sich dieser und durch die kraftwirkende Verbindung ebenfalls der zweite Kolben, wobei durch das Öffnen des Auslasses das Fluid aus dem Hubspeichervolumen in den Fluidanschluss gepresst wird. Eine derartige Ausgestaltung ist dabei ferner sehr wartungsunanfällig und sichert so eine gute Betriebssicherheit. Ferner kann das Öffnen des Hubspeichervolumens durch die Federkennwerte eingestellt werden und dadurch ein besonders definiertes Arbeiten ermöglichen. Darüber hinaus ist diese Ausgestaltung wiederum kostengünstig, wartungsarm und kompakt ausbildbar. Die Ausgestaltung der kraftwirkenden Verbindung als Federelement beziehungsweise als Druckfeder kann dabei ferner ein besonders ruckelfreies und komfortables Betätigen des entsprechenden hydraulischen Bauteils ermöglichen.

In einer weiteren vorteilhaften Ausgestaltung der Filtereinheit können der erste und/oder der zweite Fluidanschluss als Stecker oder als Buchse ausgeformt sein. Diese Ausgestaltung ermöglicht eine besonders einfache und kostengünstige Anbindung der Filtereinheit an weitere hydraulische Bauteile, wie etwa an hydraulische Leitungen oder Adapter.

In einer weiteren vorteilhaften Ausgestaltung kann das Hubspeichervolumen in einem von dem ersten Fluidpfad umströmten Zylinder angeordnet sein. Insbesondere in dieser Ausgestaltung kann eine kompakte und damit raumsparende Bauform ermöglicht werden, die weiterhin ohne das Vorsehen aufwendiger Ventilführungen ausgebildet werden kann und dadurch sehr kostengünstig sein kann.

Hinsichtlich weiterer technischer Merkmale und Vorteile der erfindungsgemäßen Filtereinheit wird hiermit explizit auf die Erläuterungen im Zusammenhang mit dem erfindungsgemäßen hydraulischen System, den Figuren sowie der Figurenbeschreibung verwiesen.

Die Erfindung betrifft ferner ein hydraulisches System, insbesondere ein hydraulisches Kupplungssystem, etwa für ein Kraftfahrzeug, wobei das hydraulische System eine wie vorstehend im Detail beschriebene Filtereinheit aufweist. Beispielsweise kann das hydraulische System ein Doppelkupplungsgetriebe aufweisen und/oder einen Geberzylinder, einen Nehmerzylinder sowie eine diese verbindende Hydraulikleitung umfassen, wobei in der Hydraulikleitung die Filtereinheit angeordnet ist. Dabei kann die Filtereinheit unmittelbar ein- oder beidseitig mit der hydraulischen Leitung, einem Adapter oder einem hydraulischen Bauteil, wie etwa einem Geberzylinder oder Nehmerzylinder verbunden sein.

Das hydraulische System, insbesondere aufweisend eine Doppelkupplung, erlaubt zusammenfassend auf einfache und kompakte Weise, dass sowohl bei einer vergleichsweise niedrigen Viskosität, als auch bei einer vergleichsweise hohen Viskosität der Hydraulikflüssigkeit diese durch die Filtereinheit strömen kann beziehungsweise das entsprechende hydraulisch zu betätigende Bauteil mit Hydraulikflüssigkeit versorgt werden kann, in der Hydraulikflüssigkeit befindliche Feststoffpartikel jedoch die Filtereinheit nicht passieren können. Dadurch umfasst das hydraulische System eine wirksame Partikelsperre unabhängig von der Viskosität des Hydraulikfluids und damit einen effektiven Schutz der hydraulischen Bauteile vor einer Verschmutzung einhergehend mit einer vergrößerten Betriebssicherheit.

I n einer bevorzugten Ausgestaltung kann das hydraulische System neben der vorbeschriebenen Filtereinheit eine weitere Filtereinheit aufweisen. In dieser Ausgestaltung wird dem Umstand Rechnung getragen, dass die Filtereinheit symmetrisch aufgebaut und von beiden Seiten gleichermaßen durchströmt werden kann. Dadurch können durch den Filtereinsatz gefilterte Partikel bei einem Rückströmen wieder in die Hydraulikleitung gelangen. Zwar kann dies für viele Anwendungen ausreichend sein, jedoch kann es zum weiteren Filtern der Schmutzpartikel von Vorteil sein, dass einseitig oder beidseitig von der Filtereinheit eine weitere Filtereinheit vorgesehen ist, die nur einseitig von dem Hydraulikfluid durchströmt wird und/oder ein weiteres Filtern und insbesondere Immobilisieren der Feststoffpartikel in der Filtereinheit ermöglicht.

Hinsichtlich weiterer technischer Merkmale und Vorteile des erfindungsgemäßen hydraulischen Systems wird hiermit explizit auf die Erläuterungen im Zusammenhang mit der erfindungsgemäßen Filtereinheit, den Figuren sowie der Figurenbeschreibung verwiesen.

Im Folgenden wird ein besonders bevorzugtes Ausführungsbeispiel der Erfindung anhand der beiliegenden Zeichnungen erläutert, wobei explizit darauf hingewiesen wird, dass der erfindungsgemäße Gegenstand nicht auf das beschriebene Ausführungsbeispiel beschränkt ist. Dabei zeigen:
Fig. 1 eine schematische Darstellung einer Ausgestaltung eines hydraulischen Systems aufweisend eine Filtereinheit;
Fig. 2 . eine schematische Schnittansicht einer Ausgestaltung einer Filtereinheit; und
Fig. 3 eine weitere schematische Schnittansicht der Ausgestaltung aus Figur 2.

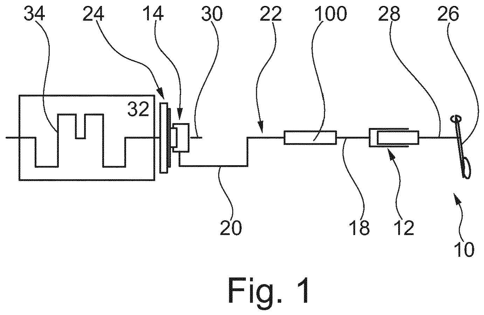

Fig. 1 zeigt in schematischer Darstellung und in nicht beschränkender Weise ein Ausführungsbeispiel eines hydraulischen Systems 10 anhand einer Kupplungsausrückvorrichtung mit einem Geberzylinder 12 und einem Nehmerzylinder 14. Eine Filtereinheit 100 ist zwischen einem ersten Leitungselement 18 und einem zweiten Leitungselement 20, die zusammen eine den Geberzylinder 12 und den Nehmerzylinder 14 verbindende Hydraulikleitung 22 bilden, angeordnet. Es versteht sich, dass die Filtereinheit 100 in anderen Ausführungsbeispielen auch direkt an dem Geberzylinder 12 oder dem Nehmerzylinder 14, beispielsweise, angeordnet sein kann.

Das Kupplungsausrücksystem betätigt die Kupplung 24 hydraulisch durch Beaufschlagung des Geberzylinders 12 mittels eines Betätigungsgliedes 26, das ein Fußpedal, ein Aktor, beispielsweise ein elektrischer oder hydraulischer Aktor, oder dergleichen sein kann. Hierdurch wird mittels einer mechanischen Übertragung 28 Druck im Geberzylinder 12 aufgebaut, der über die Hydraulikleitung 22 beziehungsweise das erste Leitungselement 18, die Filtereinheit 100 und das zweite Leitungselement 20 einen Druck im Nehmerzylinder 14 aufbaut. Dabei können ferner der Geberzylinder 12, die mechanische Übertragung 28 beziehungsweise das Betätigungsglied 26 durch einen Aktor, eine Pumpe beziehungsweise ein sogenanntes PowerPack ersetzt werden. Der Nehmerzylinder 14 kann wie in dem gezeigten Beispiel konzentrisch um die Getriebeeingangswelle 30 angeordnet sein und sich axial an einem nicht dargestellten Getriebegehäuse abstützen und die nötige Ausrückkraft über ein Ausrücklager auf die Kupplung 24 aufbringen. Weitere Ausführungsbeispiele können einen Nehmerzylinder 14, der über eine Ausrückmechanik einen Ausrücker betätigt und außerhalb der Kupplungsglocke angeordnet ist, vorsehen, wobei dieser mittels eines in hydraulischer Verbindung mit dem Geberzylinder stehenden im Nehmerzylindergehäuse untergebrachten Kolbens die Ausrückmechanik axial beaufschlagt. Zum Aufbringen der Ausrückkraft ist der Nehmerzylinder 14 jeweils gehäusefest am Getriebegehäuse, das hier nicht dargestellt ist, oder an einem anderen gehäusefesten Bauteil angebracht. Die Getriebeeingangswelle 30 überträgt bei geschlossener Kupplung 24 das Drehmoment der Brennkraftmaschine 32 auf ein nicht dargestelltes Getriebe und anschließend auf die Antriebsräder eines Kraftfahrzeuges über eine Kurbelwelle 34.

Das hydraulische System 10 kann auch Teil einer Kupplungsausrückvorrichtung für ein Doppelkupplungsgetriebe sein, in diesem Fall sind prinzipiell zwei hydraulische Systeme parallel zueinander angeordnet und betätigen mit einer Kupplungsausrückvorrichtung jeweils eine Kupplung des Doppelkupplungsgetriebes. Es sind dann stark vereinfacht zwei Geberzylinder 12, zwei Nehmerzylinder 14, oder ein Aktor, der beide Teilsysteme betreiben kann, sowie zwei Kupplungen 24 jeweils für einen Teilstrang des Doppelkupplungsgetriebes vorhanden. Dabei kann in jedem der hydraulischen Systeme oder nur in einem der hydraulischen Systeme eine Filtereinheit 100 angeordnet sein.

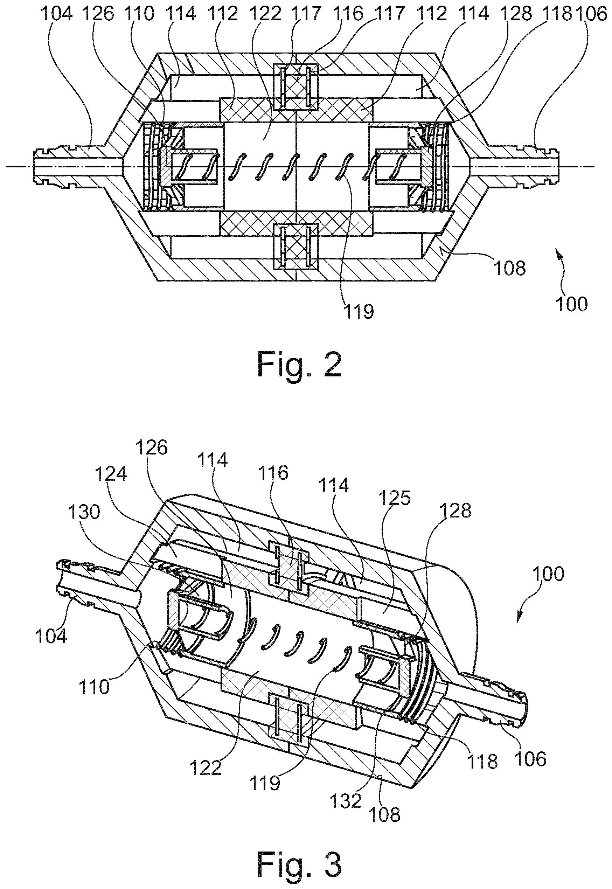

In den Figuren 2 und 3 ist eine Ausgestaltung einer Filtereinheit 100 im Detail gezeigt. Die Filtereinheit 100 umfasst einen ersten Fluidpfad, der von einem ersten Fluidanschluss 104 zu einem zweiten Fluidanschluss 106 führt, wie dies in den Figuren 2 und 3 ist. In dem ersten Fluidpfad ist dabei ein Filterelement 116 zum Filtern von Feststoffpartikeln vorgesehen. Der erste 104 und der zweite 106 Fluidanschluss sind dabei als Stecker ausgeformt und ferner Teil eines Gehäuses 108 der Filtereinheit 100.

Insbesondere für den Fall, dass das Hydraulikfluid eine vergleichsweise niedrige Viskosität aufweist, strömt das Hydraulikfluid durch den Fluidanschuss 104 des Gehäuses 108, vorbei an einer Druckfeder 110 außen entlang einer als Strömungsteiler dienenden Hülse 112 und in den kreisringförmigen Querschnitt 114. Anschließend wird das Fluid in dem Filterelement 116 gefiltert, wobei das Filterelement 116 durch Halteelemente 117 fixiert werden kann. Nach dem Filterelement 116 strömt das Fluid analog zum Hinweg durch den kreisringförmigen Querschnitt 114 entlang der Hülse 112 vorbei an der Druckfeder 118 beziehungsweise durch diese durch und durch den zweiten Fluidanschluss 106 wieder aus der Filtereinheit 100 heraus. Da die Filtereinheit 100 vorzugsweise symmetrisch aufgebaut ist, durchläuft das Hydraulikfluid in beide Richtungen identische Bauteile. Der Rückweg des Fluids erfolgt wie oben beschrieben, in die entgegengesetzte Richtung.

Jedoch kann das Filterelement 116 bei einer hohen Viskosität des Hydraulikfluids für das Hydraulikfluid nur schwer durchströmbar sein. Dadurch kann ein eingangsseitig ein hoher Druck entstehen und ferner die Hydraulikflüssigkeit nicht wie gewünscht zu der hydraulisch betätigten Komponente fließen. Bei tiefen Temperaturen und dadurch hochviskosem Fluid, ist der Volumenstrom durch das Filterelement 116 somit gegebenenfalls zu klein, um in der vorgeschriebenen Zeit den benötigten Druck im Nehmerzylinder 14 aufzubauen.

Um diesem Effekt entgegenzuwirken, umfasst die Filtereinheit 100 weiterhin einen zweiten von dem ersten Fluidanschluss 104 zu dem zweiten Fluidanschluss 106 führenden Fluidpfad. In diesem ist ein Hubspeichervolumen 122 zur Aufnahme eines selbsttätig gefilterten Fluidvolumens angeordnet. Dabei ist es vorgesehen, dass bei einem vorbestimmten Fluideingangsdruck ein mit dem als Fluidausgang dienenden Fluidanschluss 106 fluidisch verbundener Auslass 124, 125 des Hubspeichervolumens 122 öffnet. In der Ausgestaltung gemäß Figuren 2 und 3 wird dabei das Hubspeichervolumen 122 durch zwei kraftwirkend miteinander verbundene Kolben 126, 128 begrenzt, die in der das Hubspeichervolumen 122 begrenzenden Hülse112, welche als Zylinder dient, verfahrbar sind. Dabei weisen die Kolben 126, 128 an ihrer Stirnseite den mit einem Filterelement 130, 132 ausgestatteten beziehungsweise durch diese gebildete Fluideinlass auf und sind in Richtung des Hubspeichervolumens 122 federvorgespannt.

Dadurch wird ermöglicht, dass aus einem separaten, vorgefilterten Volumen, dem Hubspeichervolumen 122, das Hydraulikfluid bereitgestellt wird. In einer Situation einer Funktion des ersten Fluidanschlusses 104 als Fluideingang wird der Kolben 126 und durch die kraftschlüssige Verbindung 119 auch der Kolben 128 axial in Strömungsrichtung verschoben. Das in dem Hubspeichervolumen 122 vorgefilterte Fluid wird dabei zwischen den beiden Kolben 126, 128 und der Hülse 112, je nach Betätigungsrichtung aus dem Auslass 124, 125 wie folgt herausgedrückt.

In der Ausgestaltung gemäß den Figuren 2 und 3 öffnet, bei einer Funktion des ersten Fluidanschlusses 104 als Fluideingang bei einem Verlagern des Kolbens 128 entgegen der Federkraft der Auslass 125 des Hubspeichervolumens 122, in welchen das Hydraulikfluid aus dem Hubspeichervolumen durch einen Strömungspfad fließt, welcher zwischen der Hülse 112 und gemäß Figuren 2 und 3 dem linken Ende beziehungsweise dem in das Hubspeichervolumen 122 gerichtete Ende des Kolbens 128 gebildet wird, so dass das Hydraulikfluid um den Kolben 128 und durch die Druckfeder 118 strömen kann. Bei einer Funktion des zweiten Fluidanschlusses 106 fließt das Hydraulikfluid entsprechend durch den Auslass 124.

Das vorgefilterte Hubspeichervolumen 122 kann je nach Auslegung für beliebig viele Hübe vorgesehen werden. Hört der Volumenstrom auf, stellt sich vor und nach der Filtereinheit 100 ein Gleichgewicht ein und die Kolben 126, 128 werden durch Rückstellelemente, die Druckfedern 110, 118 und die ebenfalls als Feder ausgestaltete kraftschlüssige Verbindung 119 in ihre Ausgangslage zurückgedrückt. Das Hydraulikfluid wird durch die in den Kolben 126, 128 mit eingearbeitete Filterelemente 130, 132 beim Zurückfahren in Ausgangslage vorgefiltert, wobei in diesem Schritt eine hohe Viskosität gegebenenfalls nicht stört.

Dabei kann es vorgesehen sein, dass in Fluidrichtung in das Hubspeichervolumen 122 jeweils stromaufwärts ein Rückschlagventil angeordnet ist, welches ein Durchströmen des Hydraulikfluids nur in Richtung des Hubspeichervolumens 122 erlaubt.

Sollte aus bestimmten Gründen dennoch eine Bypassfunktion ohne Filterung des Fluids vorgesehen werden müssen, kann dies ebenfalls bewerkstelligt werden, in dem beide Kolben 126, 128 auf Block in Strömungsrichtung fahren und ein Spalt zwischen dem stromabwärts ersten Kolben und der Hülse 112 in Strömungsrichtung öffnet.

### Bezugszeichenliste

- 10: hydraulisches Systems
- 12: Geberzylinder
- 14: Nehmerzylinder
- 18: erstes Leitungselement
- 20: zweites Leitungselement
- 22: Hydraulikleitung
- 24: Kupplung
- 26: Betätigungsglied
- 28: mechanische Übertragung
- 30: Getriebeeingangswelle
- 32: Brennkraftmaschine
- 34: Kurbelwelle
- 100: Filtereinheit
- 104: erster Fluidanschluss
- 106: zweiter Fluidanschluss
- 108: Gehäuse
- 110: Druckfeder
- 112: Hülse
- 114: kreisringförmiger Querschnitt
- 116: Filterelement
- 117: Halteelement
- 118: Druckfeder
- 119: kraftschlüssige Verbindung
- 122: Hubspeichervolumen
- 124: Auslass
- 125: Auslass
- 126: Kolben
- 128: Kolben
- 130: Filterelement
- 132: Filterelement

## Patentansprüche

1. Filtereinheit für ein hydraulisches System, insbesondere für ein hydraulisches Kupplungssystem, zum Filtrieren von Feststoffkomponenten aus einem Hydraulikfluid, umfassend einen ersten Fluidpfad, der von einem ersten Fluidanschluss (104) zu einem zweiten Fluidanschluss (106) führt, wobei in dem ersten Fluidpfad ein Filterelement (116) zum beidseitigen Filtern von Feststoffpartikeln vorgesehen ist, wobei die Filtereinheit (100) zusätzlich einen zweiten von dem ersten Fluidanschluss (104) zu dem zweiten Fluidanschluss (106) führenden Fluidpfad aufweist, in dem ein Hubspeichervolumen (122) zur Aufnahme eines selbsttätig gefilterten Fluidvolumens angeordnet ist, wobei bei einem vorbestimmten Fluideingangsdruck ein mit dem als Fluidausgang dienenden Fluidanschluss (104,106) fluidisch verbundener Auslass (124, 125) des Hubspeichervolumens öffnet, **dadurch gekennzeichnet, dass** das Hubspeichervolumen (122) wenigstens einen mit einem Filterelement (130, 132) ausgestatteten Fluideinlass aufweist und durch zwei kraftwirkend miteinander verbundene Kolben (126, 128) begrenzt wird, die in einer das Hubspeichervolumen (122) begrenzenden Hülse (112) verfahrbar sind, wobei die Kolben (126, 128) an ihrer Stirnseite den mit einem Filterelement (130, 132) ausgestatteten Fluideinlass aufweisen und in Richtung des Hubspeichervolumens (122) federvorgespannt sind, wobei sich bei einem Verlagern eines Kolbens (126, 128) entgegen der Federkraft der Auslass (124, 125) des Hubspeichervolumens (122) öffnet.

2. Filtereinheit nach Anspruch 1, **dadurch gekennzeichnet, dass** die kraftwirkende Verbindung (119) als Federelement ausgestaltet ist.

3. Filtereinheit nach Anspruch 1 oder 2, **dadurch gekennzeichnet, dass** der erste und/oder der zweite Fluidanschluss (104, 106) als Stecker oder als Buchse ausgeformt ist.

4. Filtereinheit nach einem der Ansprüche 1 bis 3, **dadurch gekennzeichnet, dass** das Hubspeichervolumen (122) in der von dem ersten Fluidpfad umströmten Hülse (112) angeordnet ist.

5. Hydraulisches System, insbesondere hydraulisches Kupplungssystem, **dadurch gekennzeichnet, dass** es eine Filtereinheit (100) nach einem der Ansprüche 1 bis 4 aufweist.

6. Hydraulisches System nach Anspruch 5, **dadurch gekennzeichnet, dass** das hydraulische System neben der Filtereinheit (100) nach einem der Ansprüche 1 bis 4 eine weitere Filtereinheit aufweist.

7. Hydraulisches System nach Anspruch 5 oder 6, **dadurch gekennzeichnet, dass** das hydraulische System eine Doppelkupplung aufweist.

## Claims

1. Filter unit for a hydraulic system, in particular for a hydraulic clutch system, for filtering solid components from a hydraulic fluid, comprising a first fluid path which leads from a first fluid connector (104) to a second fluid connector (106), a filter element (116) for two-sided filtering of solid particles being provided in the first fluid path, the filter unit (100) additionally having a second fluid path which leads from the first fluid connector (104) to the second fluid connector (106) and in which a stroke storage volume (122) for receiving an automatically filtered fluid volume is arranged, an outlet (124, 125) of the stroke storage volume, which outlet (124, 125) is connected fluidically to the fluid connector (104, 106) which serves as a fluid outlet, opening at a predefined fluid inlet pressure, **characterized in that** the stroke storage volume (122) has at least one fluid inlet which is equipped with a filter element (130, 132), and is delimited by way of two pistons (126, 128) which are connected to one another in a force-acting manner and can be moved in a sleeve (112) which delimits the stroke storage volume (122), the pistons (126, 128) having, on their end side, the fluid inlet which is equipped with a filter element (130, 132), and being prestressed by a spring in the direction of the stroke storage volume (122), the outlet (124, 125) of the stroke storage volume (122) opening in the case of a movement of the piston (126, 128) counter to the spring force.

2. Filter unit according to Claim 1, **characterized in that** the force-acting connection (119) is configured as a spring element.

3. Filter unit according to Claim 1 or 2, **characterized in that** the first and/or the second fluid connector (104, 106) are/is formed as a plug or as a socket.

4. Filter unit according to one of Claims 1 to 3, **characterized in that** the stroke storage volume (122) is arranged in the sleeve (112), around which the first fluid path flows.

5. Hydraulic system, in particular hydraulic clutch system, **characterized in that** it has a filter unit (100) according to one of Claims 1 to 4.

6. Hydraulic system according to Claim 5, **characterized in that** the hydraulic system has a further filter unit in addition to the filter unit (100) according to one of Claims 1 to 4.

7. Hydraulic system according to Claim 5 or 6 **characterized in that** the hydraulic system has a double clutch.

## Revendications

1. Unité de filtre pour un système hydraulique, en particulier pour un système d'embrayage hydraulique, pour éliminer par filtrage des composants solides d'un fluide hydraulique, comprenant un premier chemin de fluide qui conduit d'un premier raccord de fluide (104) à un deuxième raccord de fluide (106), un élément de filtre (116) étant prévu dans le premier chemin de fluide pour éliminer par filtrage les particules solides des deux côtés, l'unité de filtre (100) présentant en outre un deuxième chemin de fluide conduisant depuis le premier raccord de fluide (104) jusqu'au deuxième raccord de fluide (106), dans lequel est disposé un volume de stockage de course (122) pour recevoir un volume de fluide automatiquement filtré, une sortie (124, 125) du volume de stockage de course, connectée fluidiquement au raccord de fluide (104, 106) servant de sortie de fluide s'ouvrant à une pression d'entrée de fluide prédéterminée, **caractérisée en ce que** le volume de stockage de course (122) présente au moins une entrée de fluide munie d'un élément de filtre (130, 132) et est limité par deux pistons (126, 128) connectés l'un à l'autre en exerçant une force, lesquels peuvent être déplacés dans une douille (112) limitant le volume de stockage de course (122), les pistons (126, 128) présentant, au niveau de leur côté frontal, l'entrée de fluide munie d'un élément de filtre (130, 132) et étant précontraints par ressort dans la direction du volume de stockage de course (122), la sortie (124, 125) du volume de stockage de course (122) s'ouvrant dans le cas d'un déplacement d'un piston (126, 128) à l'encontre de la force de ressort.

2. Unité de filtre selon la revendication 1, **caractérisée en ce que** la liaison par force (119) est réalisée sous forme d'élément de ressort.

3. Unité de filtre selon la revendication 1 ou 2, **caractérisée en ce que** le premier et/ou le deuxième raccord de fluide (104, 106) est réalisé sous forme de connecteur enfichable ou sous forme de douille.

4. Unité de filtre selon l'une quelconque des revendications 1 à 3, **caractérisée en ce que** le volume de stockage de course (122) est disposé dans la douille (112) parcourue par le premier chemin de fluide.

5. Système hydraulique, en particulier système d'embrayage hydraulique, **caractérisé en ce qu'**il présente une unité de filtre (100) selon l'une quelconque des revendications 1 à 4.

6. Système hydraulique selon la revendication 5, **caractérisé en ce que** le système hydraulique présente, en plus de l'unité de filtre (100) selon l'une quelconque des revendications 1 à 4, une unité de filtre supplémentaire.

7. Système hydraulique selon la revendication 5 ou 6, **caractérisé en ce que** le système hydraulique présente un double embrayage.
